# Europäisches Patentamt
# European Patent Office
# Office européen des brevets

(19)

(11) Veröffentlichungsnummer: **0 215 853**
**B1**

(12) **EUROPÄISCHE PATENTSCHRIFT**

(45) Veröffentlichungstag der Patentschrift:
26.07.89

(21) Anmeldenummer: 86901735.0

(22) Anmeldetag: 19.03.86

(86) Internationale Anmeldenummer:
PCT/AT 86/00022

(87) Internationale Veröffentlichungsnummer:
WO 86/05481 (25.09.86 Gazette 86/21)

(51) Int. Cl.⁴: **C 04 B 35/66, B 22 D 41/02,**
**F 27 D 1/16**

(54) RIESELFÄHIGE, PLASTISCHE, KOHLENSTOFFHALTIGE, FEUERFESTE MASSE.

(30) Priorität: 19.03.85 AT 818/85

(43) Veröffentlichungstag der Anmeldung:
01.04.87 Patentblatt 87/14

(45) Bekanntmachung des Hinweises auf die Patenterteilung:
26.07.89 Patentblatt 89/30

(84) Benannte Vertragsstaaten:
AT BE CH DE FR GB IT LI LU NL SE

(56) Entgegenhaltungen:
EP-A- 0 064 863
EP-A- 0 096 508
DE-A- 3 437 385
GB-A- 2 040 911
GB-A- 2 106 494
US-A- 3 729 329
US-A- 4 324 862

(73) Patentinhaber: **Veitscher**
**Magnesitwerke-Actien-Gesellschaft,**
**Schubertring 10-12, A-1010 Wien (AT)**

(72) Erfinder: **PFINGSTNER, Walter, Magnesitstrasse 6,**
**A-8700 Leoben (AT)**

(74) Vertreter: **Kliment, Peter, Dipl.-Ing. Mag.-jur. et al,**
**Singerstrasse 8, A-1010 Wien (AT)**

ACTORUM AG

## Beschreibung

Die Erfindung betrifft eine rieselfähige, kohlenstoffhaltige, feuerfeste Masse, zur Auskleidung von Behältern für flüssigen Stahl, mit gekörntem, magnesia- oder zirkoniahaltigem Feuerfestmaterial, einem festen Kohlenstoffträger und einem wärmehärtenden Kunstharz.

In neuerer Zeit sind die Anforderungen an die feuerfeste Auskleidung von Stahltransport- und -gießpfannen stark gestiegen. Bedingt durch die häufig wesentlich höheren Temperaturen und längeren Verweilzeiten der Schmelzen infolge zumeist nachgeschalteter Stranggußanlagen, aber auch durch die vielfach in diese Pfannen verlegten metallurgischen Arbeiten, wie Entschwefeln und Entphosphoren, kommt es zu sehr hohen Beanspruchungen der Auskleidungsmaterialien, so daß die in der Vergangenheit verwendeten Zustellungsmaterialien, wie saure Klebsande, Schamotte, Bauxit, nur mehr beschränkt eingesetzt werden können.

Bei diesen erhöhten Beanspruchungen haben sich Pfannenauskleidungen aus Magnesia-, Magnesiachromit- und Dolomitsteinen durchgesetzt. Die materialspezifischen Eigenschaften dieser basischen Steine, wie hohe Dilatation, hohe Wärmeleitfähigkeit und geringe Temperaturwechselbeständigkeit, erfordern allerdings ein sehr sorgfältiges und daher zufolge des Zeitaufwands teures Verlegen dieser Materialien. Man ist daher bestrebt, den hohen Zeitaufwand bei der Zustellung dieser Behälter durch den Einsatz basischer, feuerfester Baumassen zu senken.

Zum Stand der Technik zählen Pfannenzustellungseinrichtungen, die in der Lage sind, die Zustellungsmassen automatisch einzubringen und sie auch ausreichend zu verdichten. Dazu gehören die sogenannten Slingeranlagen und die automatischen Pfannenstampfanlagen.

Beim Slingern erfährt die plastische Masse eine große Beschleunigung am Ende eines Transportbandes und wird so von der Pfannenkrone, d.h. dem obersten Pfannenrand, nach unten zwischen eine Schablone und dem zumeist vorhandenen Dauer- oder Isolierfutter der Pfanne eingebracht. Dabei ergibt sich durch den großen Massedurchsatz eine kurze Zustellungszeit. Es erfolgt jedoch keine gleichmäßige Verdichtung, da es zu Kornrückprall und zu Kornentmischungen und dadurch zur Ausbildung von Grobkornnestern kommt. Es liegt somit ein uneinheitlicher Massenaufbau vor.

Bei den automatischen Pfannenstampfanlagen wird der ansonst händische Stampfvorgang automatisiert. Das Material gelangt in stampffähiger Konsistenz direkt vor die fliegend gelagerten Preßluftstampfer und wird anschließend kontinuierlich verdichtet. Dabei ergibt sich bei einer kontrollierten, automatisierten Verdichtung eine kurze Zustellungszeit, die nur etwa 10 bis 20% der für das händische Stampfen benötigten Zeit beträgt. Zum Unterschied von den geslingerten Pfannen treten hier keine Kornentmischungen auf.

Die bei diesem Stampfverfahren bisher erprobten Stampfmassen aus basischen Grundmaterialien mit herkömmlicher anorganischer Bindung, wie Silikat, Sulfat, Phosphat, Chromat, erbrachten keine befriedigenden Ergebnisse. Bedingt durch die bei diesen Massetypen vorliegenden, zumeist ausgeprägten Bindungslücken im Verlauf des Aufheizens durch Schwächerwerden der chemischen Bindung bei noch nicht erfolgter Keramisierung, kommt es infolge der hohen Dilatation dieser basischen Materialien häufig zu einem schichtenweisen Abplatzen der Masse während des Betriebes. Auch die Infiltrationen von Schlacke und Stahl in den obersten Masseschichten wirken sich sehr nachteilig aus und fördern die Neigung zu Abplatzungen. Außerdem ist bei Verwendung solcher Stampfmassen ein sehr hoher Zeit- und Energieaufwand zur Erzielung der Abbindung erforderlich. Bis zum Entfernen der Schablone muß die Masse zumindest teilweise chemisch verfestigt sein. Die anschließende, etwa ein bis zwei Tage dauernde Trocknung mittels Gasbrenner oder ähnlichem ist unter Einhaltung mindestens eines Temperaturplateaus bis zur Erreichung der Endfestigkeit überaus energieaufwendig.

Feuerfeste Stampfmassen, die zur Erzielung der erforderlichen Plastizität mit einem Dünnteer- oder Pechzusatz versehen sind, erweisen sich ebenfalls als ungeeignet, weil bei der Trocknung dieser Massen eine Verqualmung der Teer- und pechzusätze eintritt, was die Anwendung derartiger Massen aus Umweltschutzgründen verbietet.

Aus DE-A-2 806 506 sind Magnesiacarbonsteine bekannt, bestehend aus magnesiahaltigem feuerfestem Material und kohlenstoffhaltigem Material, z.B. Graphit, die eine Bindung mittels eines mit einem Härter versehenen Phenolharzes vom Typ Novolak aufweisen. Gemäß EP-A-0 064 863 werden eine fugenlose Schutzschicht auf einer Tundishauskleidung oder das Arbeitsfutter eines Tundishes oder eines anderen metallurgischen Gefäßes dadurch hergestellt, daß in das Gefäß eine Form eingesetzt wird und in den Hohlraum zwischen Form und Gefäßinnenfläche eine trockene, körnige Masse aus, z.B. magnesia- oder zirkoniahaltigem, Feuerfestmaterial mit wärmehärtendem Kunstharz, vorzugsweise Phenol-Formaldehyd-Harz, eingebracht und durch Erhitzen verfestigt wird. Die Masse kann eine Armierung aus Fasermaterial, z.B. aus Kohlenstoffasern, aufweisen. Gemäß GB-A-2 106 494 besteht eine zur Fugenfüllung in Aluminiumelektrolysezellen bestimmte feuerfeste Stampfmasse aus kalziniertem Anthrazitkorn, Graphit, einem wärmehärtenden Kunstharz, vorzugsweise einem Phenolharz von Typ Novolak mit Formaldehyd oder einem Resolharz als Härter, und einem Benetzungsmittel, wie Glykol. Der Zusatz eines Härters bei den vorgenannten Mischungen beeinträchtigt die Lagerfähigkeit im ungeformten Zustand.

Nach US-A-4 102 694 wird eine Masse aus pulverförmigem, magnesia- oder zirkoniahaltigem Feuerfestmaterial, festem oder flüssigem Kohlenteerpech oder Petroleumpech, gegebenenfalls mit einem Anteil an Teer oder Asphalt, sowie erforderlichenfalls mit Mineralpulver, wie Koksmehl, oder Fasermaterial und erforderlichenfalls mit wärmehärtendem Kunstharz, durch einen Anteil an flüssigem Öl, wie Mineralöl, in die Form einer pumpbaren Schlämme gebracht, die zur Reparatur von Hochofenauskleidungen dient. Diese Masse besitzt eine breiartige Konsistenz und eignet sich nicht zur Verdichtung mittels Stampfen oder dgl., weil sie nicht selbsttragend und nicht ausschalbar ist.

Aufgabe der Erfindung ist die Entwicklung einer rieselfähigen, kohlenstoffhaltigen, feuerfesten Masse, die über längere Zeit, z.B. über zwei Monate oder darüber, lagerfähig und verarbeitbar bleibt, die in Pfannen oder dgl. Behälter für flüssigen Stahl eingebracht und durch händisches oder automatisiertes Stampfen, durch Slingern oder durch Rütteln oder Vibrieren verdichtet werden kann und bei deren Erhitzen Verqualmungen weitgehend vermieden werden.

Diese Aufgabe wird mit einer Masse der eingangs genannten Art nach der Erfindung dadurch gelöst, daß sie in Mischung mit dem gekörnten, magnesia- oder zirkoniahaltigen Feuerfestmaterial 4 bis 10 Gew.-% des festen Kohlenstoffträgers in Form von Graphit, Ruß, gemahlenem Koksmehl, Elektrodenbruch oder Mischungen derselben, 2 bis 7 Gew.-% eines lagerstabilen, härterfreien, wärmehärtenden Kunstharzes in Form eines Phenolharzes vom Typ Novolak und 2 bis 7 Gew.-% eines Gleit- und Plastifizierungsmittels enthält und daß sie als plastische Masse vorliegt.

Nach einer Ausführungform der Erfindung kann das Kunstharz in fester, feingemahlener Form vorliegen, vorzugsweise in einer Körnung unter 0,2 mm mit einen über 50 Gew.-% betragenden Anteil an Körnung unter 0,06 mm.

Um die Masse in einen für die Verdichtung durch Stampfen, Slingern oder Rütteln geeigneten plastischen Zustand zu versetzen, wird ein Gleit- und Plastifizierungsmittel zugegeben. Als solches Mittel kommt insbesondere flüssiger aliphatischer Kohlenwasserstoff, und zwar naphthenbasisches Öl oder paraffinbasisches Öl, oder Silikonöl in Betracht. Dieses Gleitmittel kann der in trockenem, körnigem Zustand angelieferten Masse vor dem Einbringen in den auszukleidenden Behälter zugemischt werden. Um diese Manipulation an der Arbeitsstelle zu vermeiden, ist es jedoch günstiger, das Gleitmittel bereits bei der Herstellung der Masse zuzumischen und die Masse im plastischen Zustand anzuliefern.

Nach einer weiteren Ausführungsform der Erfindung kann das Kunstharz in einem wasserfreien Lösungsmittel, wie Äthylenglykol oder Polyäthylenglykol, gelöst sein. In diesem Fall wirkt das Lösungsmittel gleichzeitig als Gleit- und Plastifizierungsmittel.

Die erfindungsgemäße Masse weist somit eine organische Bindung auf, die durch den Einsatz eines lagerstabilen Duroplasts, und zwar eines wärmehärtenden Kunstharzes in Form eines Phenolharzes vom Typ Novolak, erreicht wird, wobei der Zusatz eines Härters vermieden wird. Das Phenolharz kann auch — z.B. mit natürlichen Harzen — modifiziert sein. Zum Unterschied von den oben genannten bekannten Massen, bei denen Novolak-Harz gemeinsam mit Formaldehyd oder einem anderen Härter eingesetzt ist, bindet die erfindungsgemäße Masse überraschenderweise in der Wärme auch ohne Härter ab.

Diese Bindung hat den Vorteil, daß bei der Lagerung der Masse kaum Reaktionen auftreten und demnach eine Lagerfähigkeit von mindestens zwei bis drei Monaten und darüber erreicht wird. Bei der Verwendung von flüssigen Kunstharzen, z.B. Resolen, kann es dagegen bei der Lagerung und bei der Aushärtung der Harze in Gegenwart von etwa aus dem Feuerfestmaterial stammenden, spezifisch wirkenden Katalysatoren (vor allem zweiwertigen Metallionen, wie Mg, Ca, Cd, Mn) zu Vernetzungsreaktionen unter Chelatbildung kommen, wodurch die Lagerfähigkeit der Masse nicht mehr gegeben ist.

Durch den Einsatz eines Kunstharzes von der Art der Phenolharze wird in der erfindungsgemäßen Masse ein höheres Ausbringen an Restkohlenstoff erreicht als bei der Verwendung eines flüssigen Kunstharzes. Dadurch kommt es in der mit der erfindungsgemäßen Masse hergestellten Auskleidung im Betrieb zur Ausbildung eines verstärkten Koksgerüstes, wodurch erhöhte Festigkeit bei Betriebstemperaturen erzielt werden. Beim Einsatz eines Kunstharzes von der Art der Phenolharze ergibt sich gegenüber einem Flüssigharz ferner der Vorteil, daß bei der Erwärmung eine verminderte Wasserabspaltung auftritt, was bei nicht hydrationsbeständigem feuerfesten Grundmaterial von Bedeutung ist.

Wie erwähnt, wird durch den Einsatz eines insbesondere öligen Gleit- und Plastifizierungsmittels in einer Menge von 2 bis 7 Gew.-%, vorzugsweise 3 bis 6 Gew.-%, oder einer entsprechenden Menge an wasserfreiem Lösungsmittel im Falle der Anwendung eines gelösten Kunstharzes die für die Verarbeitung der Masse erforderliche Plastizität erreicht, wobei die Masse rieselfähig ist und erdfeuchte Konsistenz aufweist. Dabei wird im allgemeinen der Anteil an Plastifizierungsmittel im Falle der Verdichtung durch Stampfen im unteren Bereich der obigen Menge, im Falle des Slingerns im mittleren Bereich derselben und im Falle des Rüttelns oder Vibrierens im oberen Bereich dieser Menge gewählt. Es ist anzunehmen, daß die erfindungsgemäße Masse zufolge des Öl- oder Glykolzusatzes weniger zu Kornentmischungen beim Slingern neigt als die bekannten Massen.

Die erfindungsgemäße Masse weist eine ausreichende Grünfestigkeit auf, so daß sie unmittelbar nach der Verdichtung ausgeschalt werden kann. Zufolge dieser Eigenschaft ist sie auch zur Verdichtung mittels einer Stampfmaschine geeignet, die ohne eingebaute Schablone angewendet wird, bei der vielmehr nur ein mit der Stampfvorrichtung mitwanderndes, lokales schablonenartiges Gebilde, z.B. in Form eines Gliederbandes, vorgesehen ist.

Als feuerfestes Grundmaterial für die erfindungsgemäße Masse eignet sich vor allem Sinter- und/oder Schmelzmagnesia, vorzugsweise mit einem MgO-Gehalt von über 85 Gew.-%. Es können aber auch andere feuerfeste Grundmaterialien eingesetzt werden, die einen ausreichend hohen Erosionswiderstand gegenüber Schmelzen aufweisen. Es sind dies beispielsweise Spinell (wie Magnesiumaluminiumspinell), Magnesiumsilikatmaterial (wie Forsterit oder Olivin) oder Zirkon (Zirkoniumsilikat). Das Feuerfestmaterial wird zweckmäßig in an sich bekannter Weise in einer Körnung eingesetzt, die eine verhältnismäßig hohe Packungsdichte sichert.

Um einen möglichst hohen Gehalt an Restkohlenstoff zwecks Verminderung der Benetzung mit der Schmelze, aber auch mit allenfalls vorliegenden schmelzflüssigen Schlacken zu erhalten, weist die Masse einen Anteil eines festen Kohlenstoffträgers in Form von Graphit, Ruß, gemahlenem Koksmehl, Elektrodenbruch, Kohlegrus oder dgl. oder Mischungen derselben auf.

Da bei kohlenstoffgebundenen Massen bei den häufig vorliegenden oxidierenden Atmosphären durch den Abbrand des Kohlenstoffgerüstes die Festigkeitswerte herabgesetzt werden können, ist in diesen Fällen ein Oxidationsschutz erforderlich. Als solchen kann die Masse Metallpulver, wie Aluminium, Silizium, Magnesium oder Legierungen, und/oder feingemahlenes Carbid, wie Siliziumcarbid oder Borcarbid, in Mengen von 1 bis 7 Gew.-% enthalten. Die bei der Oxidation dieser Stoffe entstehenden Metalloxide schützen den zur Aufrechterhaltung der Bindung und zur Sicherung gegen Schmelzen- und Schlackeninfiltration erforderlichen Kohlenstoff vor Oxidation. Derartige Stoffe sind als Oxidationsschutz an sich bekannt. An nicht der oxidierenden Wirkung ausgesetzten Einbaustellen kann der Oxidationsschutz entfallen.

Die folgenden Ausführungsbeispiele zeigen die Zusammensetzung einiger nach der Erfindung hergestellter, verarbeitungsfertiger Massen, die eine Lagerbeständigkeit von etwa drei Monaten, eine sehr gute Schmelze- und Schlackenbeständigkeit, eine geringe Dilatation und eine sehr gute Temperaturwechselbeständigkeit aufweisen.

*Beispiel 1*

| Sintermagnesia mit 97 Gew.-% MgO | | | | |
|---|---|---|---|---|
| und 0,2 Gew.-% Fe$_2$O$_3$ | 3 | - 5 | mm | 10 Gew.-% |
| » | 1 | - 3 | mm | 36 Gew.-% |
| » | 0,1 | - 1 | mm | 15 Gew.-% |
| » | 0 | - 0,1 | mm | 22 Gew.-% |
| Novolak | | | | 4 Gew.-% |
| Graphit | | | | 3 Gew.-% |
| Ruß | | | | 2 Gew.-% |
| Magnesiumpulver | | | | 5 Gew.-% |
| Silikonöl | | | | 3 Gew.-% |

*Beispiel 2*

| Sintermagnesia mit 86 Gew.-% MgO | | |
|---|---|---|
| und 3,5 Gew.-% Fe$_2$O$_3$ 0 - 3 mm | | 81 Gew.-% |
| Novolak | | 5 Gew.-% |
| Ruß | | 5 Gew.-% |
| Siliziumcarbid SiC | | 5 Gew.-% |
| Paraffinöl | | 4 Gew.-% |

*Beispiel 3*

| Zirkon ZrSiO$_4$ | 0 - 5 mm | 84 Gew.-% |
|---|---|---|
| Elektrodenbruch | 0 - 0,2 mm | 8 Gew.-% |
| Lösung bestehend aus 37,5 Gew.-% Novolak und 62,5 Gew.-% Äthylenglykol | | 8 Gew.-% |

**Patentansprüche**

1. Rieselfähige, kohlenstoffhaltige, feuerfeste Masse, zur Auskleidung von Behältern für flüssigen Stahl, mit gekörntem, magnesia- oder zirkoniahaltigem Feuerfestmaterial, einem festen Kohlenstoffträger und einem wärmehärtenden Kunstharz, dadurch gekennzeichnet, daß sie in Mischung mit dem Feuerfestmaterial 4 bis 10 Gew.-% des festen Kohlenstoffträgers in Form von Graphit, Ruß, gemahlenem Koksmehl, Elektrodenbruch oder Mischungen derselben, 2 bis 7 Gew.-% eines lagerstabilen, härterfreien, wärmehärtenden Kunstharzes in Form eines Pehnolharzes vom Typ Novolak und 2 bis 7 Gew.-% eines Gleit- und Plastifizierungsmittels enthält und daß sie als plastische Masse vorliegt.

2. Masse nach Anspruch 1, dadurch gekennzeichnet, daß das Kunstharz in fester, feingemahlener Form vorliegt.

3. Masse nach Anspruch 2, dadurch gekennzeichnet, daß das Kunstharz in einer Körnung unter 0,2 mm mit einem über 50 Gew.-% betragenden Anteil der Körnung unter 0,06 mm vorliegt.

4. Masse nach einem der Ansprüche 1 bis 3, dadurch gekennzeichnet, daß sie als Gleitmittel flüssigen, aliphatischen Kohlenwasserstoff oder Silikonöl enthält.

5. Masse nach Anspruch 1, dadurch gekennzeichnet, daß das Kunstharz in einem wasserfreien Lösungsmittel, wie einem Glykol, gelöst ist.

6. Masse nach einem der Ansprüche 1 bis 5, dadurch gekennzeichnet, daß sie als Feuerfestmaterial Sinter- und/oder Schmelzmagnesia, vorzugsweise mit einem MgO-Gehalt von über 85 Gew.-%, Spinell, Magnesiumsilikatmaterial oder Zirkon enthält.

7. Masse nach einem der Ansprüche 1 bis 6, dadurch gekennzeichnet, daß sie 1 bis 7 Gew.-% Metallpulver, wie Aluminium, Silizium, Magnesium oder Legierungen, und/oder feingemahlenes Carbid, wie Siliziumcarbid oder Borcarbid, als Oxidationsschutz enthält.

**Claims**

1. A granular carbon-containing refractory composition for the lining of vessels for liquid steel, comprising a granulated refractory material containing magnesia or zirconia, a solid carbon carrier, and a thermosetting synthetic resin, characterized in that the composition comprises, in mixture with the refractory material, 4% to 10% by weight of solid carbon carrier in the form of graphite, carbon black, ground coke powder, crushed carbon electrodes, or mixtures thereof, 2% to 7% by weight of a stable thermosetting resin, free of hardener, in the form of a phenolic resin of the type Novolak, and 2% to 7% by weight of a plasticizer and that the composition is plastic.

2. Composition according to claim 1, characterized in that the synthetic resin is present in a finely ground, solid state.

3. Composition according to claim 2, characterized in that the synthetic resin has a grain size below 0.2 mm, with more than 50% by weight of the synthetic resin having a grain size below 0.06 mm.

4. Composition according to any of claims 1 to 3, characterized in that the plasticizer is a liquid aliphatic hydrocarbon or silicone fluid.

5. Composition according to claim 1, characterized in that the synthetic resin is dissolved in a nonaqueous solvent such as a glycol.

6. Composition according to any of claims 1 to 5, characterized in that the refractory material is a sintered and/or fused magnesia, preferably having a MgO content of more than 85% by weight, a spinel, a magnesium silicate material, or zircon.

7. Composition according to any of claims 1 to 6, characterized in that it contains as an antioxidant 1% to 7% by weight of a metal powder such as aluminium, silicium, magnesium or alloys, and/or finely ground carbide such as silicium carbide or boron carbide.

**Revendications**

1. Pisé réfractaire granuleux contenant du carbone pour revêtir des récipients d'acier liquide, comprenant un matériau réfractaire granulé contenant de la magnésia ou de la zircone, un porteur solide de carbone et une résine synthétique thermodurcissable, caractérisé en ce qu'il contient, mélangé au matériau réfractaire, 4 à 10% en poids du porteur de carbone sous la forme de graphite, de noir de fumée, de poudre de coke moulu, d'électrodes écrasées ou leurs mélanges, 2 à 7% en poids d'une résine synthétique thermodurcissable stable au stockage, sans durcisseur, sous la forme d'une résine phénolique de type Novolak et 2 à 7% en poids d'un lubrifiant et plastifiant et qu'il est une masse plastique.

2. Pisé selon la revendication 1, caractérisé en ce que la résine synthétique se trouve sous une forme solide et finement moulue.

3. Pisé selon la revendication 2, caractérisé en ce que la résine synthétique a une granulation inférieure à 0,2 mm avec une teneur en granulation s'élevant à plus de 50% en poids, inférieure à 0,06 mm.

4. Pisé selon une des revendications 1 à 3, caractérisé en ce qu'il contient comme lubrifiant de l'hydrocarbure aliphatique ou de l'huile de silicone.

5. Pisé selon la revendication 1, caractérisé en ce que la résine synthétique est dissoute dans un solvant non-aqueux tel qu'un glycol.

6. Pisé selon une des revendications 1 à 5, caractérisé en ce qu'il contient comme matériau réfractaire de la magnésie frittée et/ou la magnésie fondue, de préférence avec une teneur en MgO de plus de 85% en poids, du spinelle, du silicate de magnésium ou du zircon.

7. Pisé selon une des revendications 1 à 6, caractérisé en ce qu'il contient comme antioxydant 1 à 7% en poids de poudre métallique, tel que l'aluminium, le silicium, le magnésium ou des alliages et/ou du carbure moulu finement tel que le carbure de silicium ou le carbure de bore.